# EUROPEAN PATENT APPLICATION

(11) **EP 1 414 083 A1**
(43) Date of publication of application: **28.04.2004**
(21) Application number: 02755728.9
(22) Date of filing: 31.07.2002
(51) Int. Cl.: H01M 2/02, H01M 10/40, H01G 9/00, H01G 9/08

(54) **POWER STORAGE DEVICE**

(30) Priority: 02.08.2001 JP 2001235089
(71) Applicant: Sumitomo Electric Industries, Ltd., Osaka-shi, Osaka 541-0041 (JP)
(72) Inventor: HOSOKAWA, T., Kantoh Works of Sumitomo Elec. Ind., Kanuma-shi, Tochigi 322-8585 (JP); TANAKA, K., Kantoh Works of Sumitomo Elec. Ind Ltd, Kanuma-shi, Tochigi 322-8585 (JP); MATSUSHIMA, K., Kantoh Works of Sumitomo Elec. Ind, Kanuma-shi, Tochigi 322-8585 (JP)
(74) Representative: Cross, Rupert Edward Blount
(86) International application number: PCT/JP2002/007812
(87) International publication number: WO 2003/015191

(57) **Abstract**

A power storage device (non-aqueous electrolyte battery) 1 is constituted of a power generation unit 40 including an anode 10, a cathode 20, and an electrolyte (non-electrolyte) 30, a sealing bag 50 enclosing the power generation unit, an anode lead 12, and a cathode lead 22. The sealing bag 50 includes a first sheet 51 and a second sheet 52, which are composed of a composite packaging material and face each other, and includes a pair of spacers 60 made of synthetic resin for securing space accommodating the power generation unit. The spacers are arranged between a face F51 of the first sheet facing the second sheet and a face F52 of the second sheet facing the face F51, and individually arranged at positions on edges of the face F51 facing each other.

## Description

### Technical Field

The present invention relates to a electric power storage device used as a power source of electronic equipment or the like. Specifically, the present invention relates to a power storage device such as an electrolytic capacitor (aluminum electrolytic capacitor, etc.), an electric double layer capacitor, and a non-aqueous electrolyte battery, which include an anode, a cathode, a non-aqueous electrolyte, an anode lead, and a cathode lead, the anode, the cathode, and the non-aqueous electrolyte being enclosed in a sealing bag constituted by using a composite packaging material.

### Background Art

In recent years, rapid breakthroughs have been made in the miniaturization of electronic equipment, particularly in portable electronic equipment. With such advances in electronic equipment the development and application of a small-sized lightweight high-performance power source (power storage device) with a high energy density are highly desired.

Especially, the non-aqueous electrolyte battery, such as a lithium ion secondary battery, taking a form where an anode, a cathode, and an electrolytic solution are enclosed in a small-sized lightweight sealing bag, has high battery voltage and high energy density, and the non-aqueous electrolyte battery is required to be easily miniaturized and reduced in weight. Accordingly, the non-aqueous electrolyte battery is anticipated to be the power source of the above described small-sized electronic equipment.

As such a non-aqueous electrolyte battery, there has been known a non-aqueous electrolyte battery with a constitution using a lightweight sealing bag for enclosing the anode, the cathode, and the non-aqueous electrolyte for the purpose of improving energy density per unit weight of the battery. The sealing bag is fabricated by superposing two sheets composed of a composite packaging material including a synthetic resin layer and a metallic layer such as a metallic foil and then by heat-sealing edges thereof or the like.

In this specification, the section including the anode, the cathode, and the non-aqueous electrolyte, which are enclosed within the power storage device such as the non-aqueous electrolyte battery, is generally referred to as a "power generation unit" as needed. For example, the power generation unit may further include a separator, a collector, or the like.

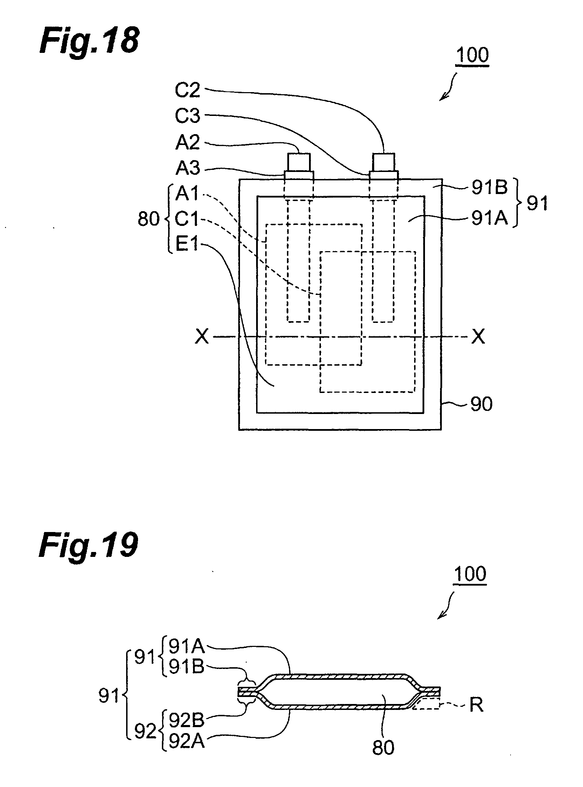

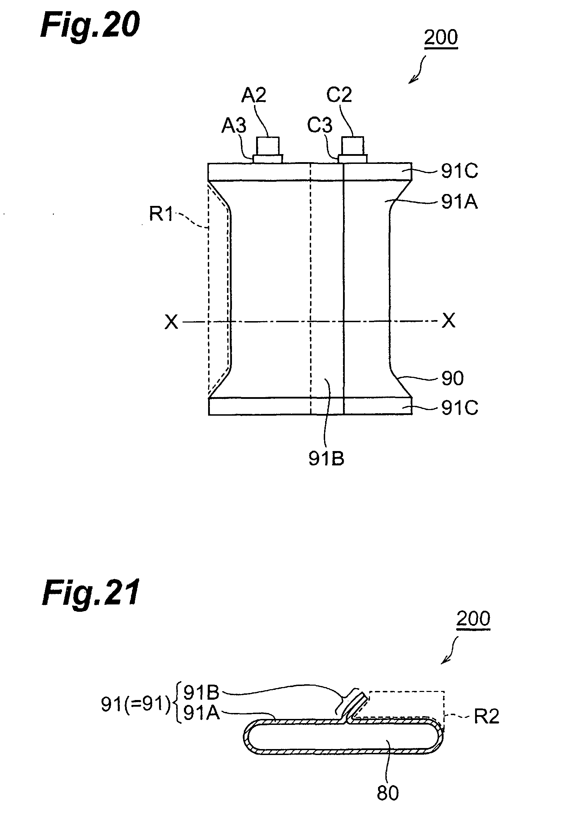

Specifically, for example, there have been known a non-aqueous electrolyte battery 100 with a structure shown in Figs. 18 and 19 and a non-aqueous electrolyte battery 200 with a structure shown in Figs. 20 and 21. Here, Fig. 18 is a front view showing a basic constitution of the conventional non-aqueous electrolyte battery 100. Fig. 19 is a sectional view taken along a line X-X of Fig. 18. Fig. 20 is a front view showing a basic constitution of the conventional non-aqueous electrolyte battery 200. Fig. 21 is a sectional view taken along a line X-X of Fig. 20.

The conventional non-aqueous electrolyte battery 100 shown in Figs. 18 and 19 mainly includes a power generation unit 80 containing an anode A1, a cathode C1, and a non-aqueous electrolyte E1, a sealing bag 90 enclosing the power generation unit 80, an anode lead A2, and a cathode lead C2. One end of the anode lead A2 is electrically connected to the anode A1, and the other end is projected out of the sealing bag 90. One end of the cathode lead C2 is electrically connected to the cathode C1, and the other end is projected out of the sealing bag 90.

As shown in Fig. 19, the sealing bag 90 is formed by sealing edges (that is, an edge 91B in the sheet 91, and an edge 92B in the sheet 92) of the two sheets 91 and 92 facing each other, which are composed of the above described composite packaging material, by means of adhesive or heat sealing. Hereinafter, the edge of each sheet after being sealed is referred to as a "sealed portion". A portion of the anode lead A2 in contact with the sealed portion 91B, 92B and a portion of the cathode lead C2 in contact with the sealed potion 92 are covered with an insulator A3 and an insulator C3, respectively, for preventing contact between these leads and the metallic layer within the composite packaging material.

Another conventional non-aqueous electrolyte battery 200 shown in Figs. 20 and 21 has a similar constitution to the conventional non-aqueous electrolyte battery 100 shown in Figs. 18 and 19 except that with the difference being the sealing bag 90 being different from that of the conventional non-aqueous electrolyte battery 100. As shown in Figs. 20 and 21, the sealing bag 90 is formed in the following manner. First, a pair of facing edges of a rectangular sheet 91 composed of a sheet of the composite packaging material are overlapped each other and sealed as a sealed portion 91B to form a tubular body having two openings. Subsequently, edges of the two openings of the tubular body are sealed as sealed portions 91C.

However, in the conventional non-aqueous electrolyte battery 100 and the conventional non-aqueous electrolyte battery 200, resulting from the formation of the sealed portion 91B or the sealed portions 91C of the sealing bag 90, for example, dead space R, R1, and R2 as shown in Figs. 19 and 21 is created outside the sealing bag. Accordingly, there is a problem in which space to be used for mounting usually rectanglar battery in the equipment cannot be efficiently utilized.

When the volume of such dead space increases, the battery energy density per unit volume of space for mounting the battery (hereinafter, referred to as "volumetric energy density on the basis of a volume of space for the battery to be mounted") decreases.

In the conventional definition of the "volumetric energy density" of a power storage device such as a battery, is defined by a ratio of full output energy from the power generation unit to the volume of the power storage device such as a battery. However, our specification uses a volumetric energy density based on the volume of space for the power storage device such as a battery to be mounted, not based on the volume of the power storage device itself such as a battery.

Here, in the present invention, the "volumetric energy density on the basis of the volume of the space for the battery to be mounted" means a ratio of full output energy from the power generation unit to an apparent volume of the battery obtained based on a maximum height, a maximum width, and a maximum thickness of the power storage device such as the battery. In fact, it becomes important to improve the volumetric energy density on the basis of the volume of the space for the battery to be mounted, as well as to improve the original definition of volumetric energy density described above.

Therefore, Japanese Patent Laid-Open No. 11(1999)-260327 gazette has proposed a non-aqueous electrolyte battery, in which a battery like the above described non-aqueous electrolyte battery 200 is shown, with at least any one of the three sealed portions 91B and 91C folded, and the bent portion designed to be limited within a thickness of a body of an exterior package. Accordingly, this non-aqueous electrolyte battery is intended only to reduce dead space created due to the sealed portions of the sealing bag of the non-aqueous electrolyte battery in the space for mounting the battery within the equipment where the battery is to be used.

### Disclosure of the Invention

However, even in the non-aqueous electrolyte battery described in the aforementioned Japanese Patent Laid-Open No. 11(1999)-260327 gazette, since the sealed portion of the sealing bag is folded, there is a problem that the volume of the folded portion causes dead space. Furthermore, even in this non-aqueous electrolyte battery, strength of the composite packaging material is weakened at the bent portion, thus increasing the likelihood of allowing penetration of moisture, oxygen, or the like from the outside of the battery or dissipation of the electrolyte component from the inside of the battery to cause deterioration of the properties of the battery. Particularly from the viewpoint of use for a long period, there is a problem that sufficient reliability of the battery cannot be obtained, and this type of non-aqueous electrolyte battery has not been adequate.

Furthermore, the problems in the above described non-aqueous electrolyte battery were generated similarly in the other power storage devices having a constitution similar to that in the above described non-aqueous electrolyte battery, such as the electrolytic capacitor (aluminum electrolytic capacitor) and the electric double layer capacitor.

The present invention is made in the light of the problems contained in the above described conventional art. An object thereof is to provide a power storage device with high "volumetric energy density on the basis of the volume of space for the device to be mounted".

The present invention provides a power storage device having a power generation unit including an anode, a cathode, and an electrolyte, a sealing bag for enclosing the power generation unit, an anode lead having one end electrically connected to the anode and the other end projected out of the sealing bag, and a cathode lead having one end electrically connected to the cathode and the other end projected out of the sealing bag. The sealing bag includes a first sheet composed of a composite packaging material, and a second sheet composed of the composite packaging material, which face each other, and spacers made of synthetic resin, the spacers being arranged between a face of the first sheet facing the second sheet and a face of the second sheet facing the face of the first sheet to secure space for accommodating the power generation unit. Moreover, the spacers are arranged in edges of the face of the first sheet facing the second sheet.

In the power storage device of the present invention, the sealing bag is constituted by use of the above described spacers. Accordingly, the dead space created in the space for mounting the device due to the sealed portions of the sealing bag in the conventional power storage device can be sufficiently reduced without lowering strength of the composite packaging material constituting the sealing bag. In the power storage device of the present invention, the volume occupied by the power generation unit in the sealing bag can be easily increased, compared to the conventional power storage device. Therefore, a power storage device is able to be provided, which is high in "the volumetric energy density on the basis of the volume of space for the device to be mounted" and capable of efficiently utilizing the space for the device to be mounted.

Here, in the present invention, the composite packaging material indicates a packaging material including a plurality of layers containing at least a synthetic resin layer and a metallic layer such as a metallic foil.

In the present invention, the first and second sheets, which constitute the sealing bag, may be connected with each other. For example, as in the various embodiments described hereafter, one sheet is folded at the center, and sheet portions having mating faces facing each other may be individually used as the first and second sheets. Specifically, the first and second sheets are continuous, and the sealing bag is formed by bending one sheet. In this way, the sealed portions in the sealing bag can be further reduced, thus improving the volumetric energy density on the basis of "the volume of space for the power storage device to be mounted".

In such a case where one sheet is folded, and the sheet portions having faces which are formed in bending and facing each other may be used individually as the first and second sheets, the spacer may be arranged along a portion where the sheet is bent. Therefore, the mechanical strength of the sealing bag can be improved.

In the power storage device of the present invention, it is preferable to have a spacer at the rim of the sheet where the bag is sealed at positions facing each other on the edges of the face of the first sheet facing the second sheet. In this way, a sealing bag with high mechanical strength can be formed even under a condition where the number of spacers to be used is minimized. Moreover, when the number of spacers to be used is minimized, it is possible to more efficiently reduce the size of the sealed portions formed between the spacers and the first sheet or between the spacers and the second sheet. Accordingly, the size of dead space due to the shapes of the spacers in the sealing bag can be reduced more efficiently. Therefore, the sealing bag can accommodate the power generation unit with a larger volume, thus improving the volumetric energy density on the basis of the volume of space for the power storage device to be mounted.

Moreover, in the present invention, the power storage device indicates a device of a configuration including a power generation unit which includes an anode, a cathode, and an electrolyte, a sealing bag for enclosing the power generation unit, an anode lead having one end electrically connected to the anode and the other end projected out of the sealing bag, and a cathode lead having one end electrically connected to the cathode and the other end projected out of the sealing bag. More specifically, the power storage device indicates, for example, a non-aqueous electrolyte battery such as the lithium ion secondary battery, the electrolytic capacitor such as the aluminum electrolytic capacitor, and the electric double layer capacitor having polarizable electrodes as the anode and the cathode. In the case of the battery, the power storage device may be a primary battery or a secondary battery.

### Brief Description of the Drawings

Fig. 1 is a front view showing a first embodiment of a power storage device (non-aqueous electrolyte battery) according to the present invention.
Fig. 2 is a developed view showing a basic constitution of the power storage device (non-aqueous electrolyte battery) shown in Fig. 1.
Fig. 3 is a sectional view taken along a line X-X of Fig. 1.
Fig. 4 is a front view showing a second embodiment of the power storage device (non-aqueous electrolyte battery) according to the present invention.
Fig. 5 is a developed view showing a basic constitution of the power storage device (non-aqueous electrolyte battery) shown in Fig. 4.
Fig. 6 is a sectional view taken along a line X-X of Fig. 4, when viewed from an inside of a sealing bag.
Fig. 7 is a sectional view taken along a line Y-Y of Fig. 4.
Fig. 8 is a front view showing a third embodiment of the power storage device (non-aqueous electrolyte battery) according to the present invention.
Fig. 9 is a developed view showing a basic constitution of the power storage device (non-aqueous electrolyte battery) shown in Fig. 8.
Fig. 10 is a sectional view taken along a line X-X of Fig. 8, when viewed from the inside of the sealing bag.
Fig. 11 is a front view showing a fourth embodiment of the power storage device (non-aqueous electrolyte battery) according to the present invention.
Fig. 12 is a developed view showing a basic constitution of the power storage device (non-aqueous electrolyte battery) shown in Fig. 11.
Fig. 13 is a sectional view taken along a line X-X of Fig. 11.
Fig. 14 is a sectional view showing a fifth embodiment of the power storage device (non-aqueous electrolyte battery) according to the present invention.
Fig. 15 is a sectional view showing a sixth embodiment of the power storage device (non-aqueous electrolyte battery) according to the present invention.
Figs. 16A, 16B, and 16C are sectional views, each showing another embodiment of the power storage device (non-aqueous electrolyte battery) according to the present invention.
Fig. 17 is a front view showing another embodiment of the power storage device (non-aqueous electrolyte battery) shown in Figs. 11 to 13.
Fig. 18 is a front view showing an example of a basic constitution of a conventional non-aqueous electrolyte battery.
Fig. 19 is a sectional view taken along a line X-X of Fig. 18.
Fig. 20 is a front view showing another example of the basic constitution of the conventional non-aqueous electrolyte battery.
Fig. 21 is a sectional view taken along a line X-X of Fig. 20.

### Best Modes for Carrying Out the Invention

Preferred embodiments of a non-aqueous electrolyte battery will be described in detail below with reference to the drawings in a case where a power storage device according to the present invention is applied to the non-aqueous electrolyte battery. Note that, in the following description, the same or like members are given the same reference numerals and symbols, thus omitting the duplicate explanation.

### [First Embodiment]

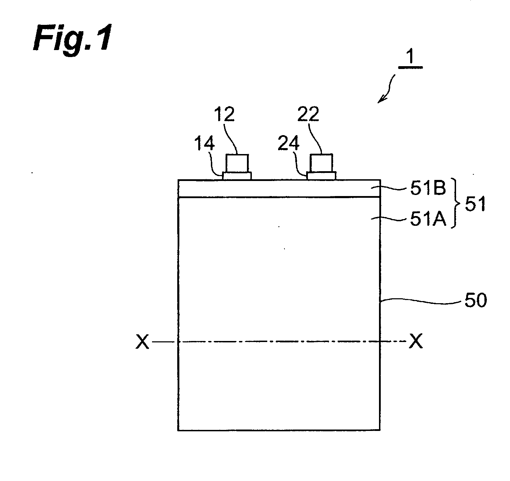

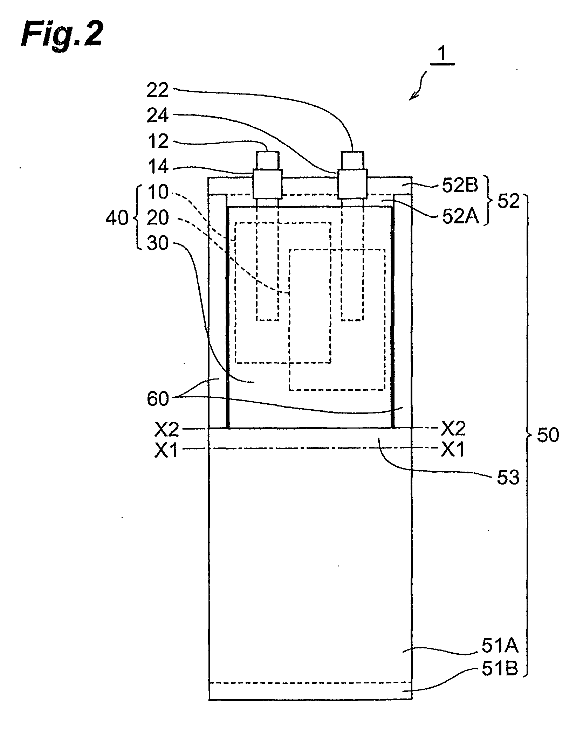

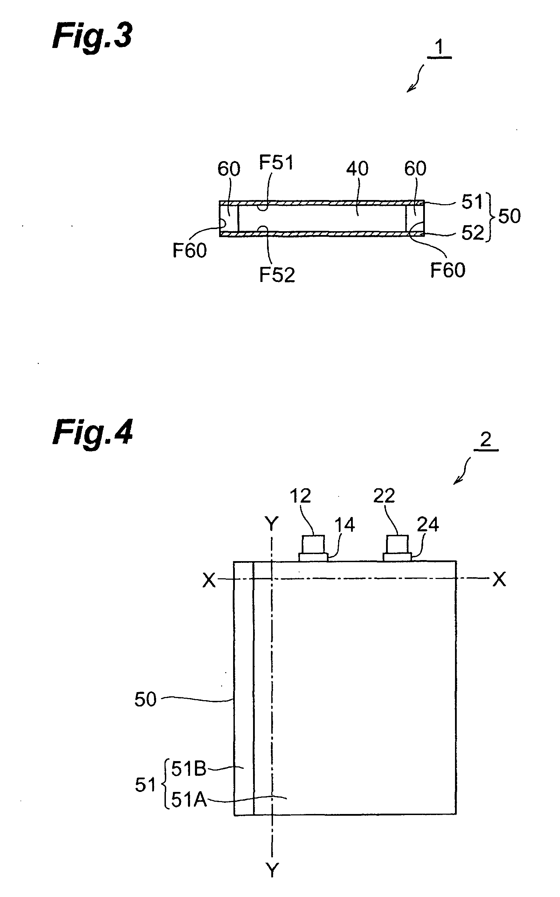

Fig. 1 is a front view showing a first embodiment of the non-aqueous electrolyte battery as a power storage device of the present invention. Fig. 2 is a developed view showing a basic constitution of the non-aqueous electrolyte battery shown in Fig. 1. Furthermore, Fig. 3 is a sectional view taken along a line X-X of Fig. 1.

As shown in Figs. 1 to 3, a non-aqueous electrolyte battery 1 mainly includes a power generation unit 40 containing an anode 10, a cathode 20, and a non-aqueous electrolyte 30, a sealing bag 50 enclosing the power generation unit 40, an anode lead 12, and a cathode lead 22. One end of the anode lead 12 is electrically connected to the anode 10, and the other end is projected out of the sealing bag 50. One end of the cathode lead 22 is electrically connected to the cathode 20, and the other end is projected out of the sealing bag 50.

Each component of this embodiment will be described in detail below, based on Figs. 1 to 3.

The sealing bag 50, as previously described, includes a first sheet 51 composed of a composite packaging material, a second sheet 52 composed of a composite packaging material, and a pair of spacers 60 made of synthetic resin for securing space to accommodate the power generation unit 40, the first and second sheets 51 and 52 facing each other of the first sheet 51 facing the second sheet.

The pair of spacers 60 is arranged between a face F51 of the first sheet 51, facing the second sheet 52, and a face F52 of the second sheet 52, facing the face F51. The spacers 60 in a pair are individually arranged at facing positions on edges of the face F51 of the first sheet 51 facing the second sheet.

Since the pair of spacers is arranged in the manner, as previously described, dead space in the sealing bag 50, due to shapes of the spacers 60, can be reduced more efficiently. Consequently, the power generation unit 40 of a larger volume can be accommodated in the sealing bag 50, thus improving "the volumetric energy density on the basis of the volume of space for the battery 1 to be mounted".

As shown in Fig. 2, the first and second sheets 51 and 52 in this embodiment are connected. Specifically, the sealing bag 50 in this embodiment is formed in a manner that one rectangular sheet composed of a composite packaging material is bent at bending lines X1-X1 and X2-X2 shown in Fig. 2, and a pair of facing edges (in the drawing, an edge 51B of the first sheet 51 and an edge 52B of the second sheet 52) of the rectangular sheet is overlapped and sealed. In this embodiment, the first and second sheets 51 and 52 denote the sheet portions including the faces (F51 and F52) facing each other, which are formed in bending the rectangular sheet as described above.

Therefore, as previously described, since the spacer does not necessarily need to be disposed at the bottom portion 53 of the first and second sheets 51 and 52, the bottom portion 53 being formed between the bending lines X1-X1 and X2-X2, thus the sealed portions in the sealing bag 50 can be further reduced. Consequently, the volumetric energy density of the battery 1, on the basis of the volume of the space for the battery 1 to be mounted, can be further improved.

Preferably, from the viewpoint of utilizing the space for the battery 1 to be mounted efficiently, a distance between the bending lines X1-X1 and X2-X2 is substantially equal to a thickness of the spacers 60. In a case where the sealing bag 50 is required to increase in mechanical strength or the like, a spacer may be disposed along the bottom portion 53 of the first and second sheets 51 and 52, the bottom portion 53 being formed between the bending lines X1-X1 and X2-X2, as needed.

In the case of this embodiment, one end of each of the anode lead 12 and the cathode lead 22, which are connected to the power generation unit 40, is arranged so as to project out of the above described sealed portion, where the edge 51B of the first sheet 51 and the edge 52B of the second sheet 52 are sealed.

Here, in the present invention, the construction material of the spacers 60 is not particularly limited as long as the construction material is synthetic resin. However, preferably, from the viewpoint of sufficiently securing the energy density per unit weight of the non-aqueous electrolyte battery, the construction material of the spacers 60 is any one type of polymer selected from a group consisting of cross-linked polyolefin and liquid crystal polymer.

Here, the cross-linked polyolefin indicates polyolefin having molecules cross-linked in a three dimensional mesh, which is difficult to dissolve in an organic solvent and difficult to be melted at a temperature other than melting point. As such cross-linked polyolefin, cross-linked polypropylene or cross-linked polyethylene is further preferred. From the viewpoint of productivity, among the above described cross-linked polyolefin, one cross-linked by irradiation of ionizing radiation is preferred.

The composite packaging material constituting the first and second sheets 51 and 52 is not particularly limited as long as the packaging material includes a synthetic resin layer or a metallic layer such as a metallic foil. However, from the viewpoint of effectively preventing penetration of moisture or air into the power generation unit from the outside of the battery and dissipation of an electrolyte component from the inside of the battery to the outside thereof while securing a sufficient mechanical strength and lightweight, the composite packaging material preferably includes three layers or more, containing an innermost layer made of synthetic resin; which is arranged on the innermost side of the sealing bag 50 in contact with the power generation unit 40; an outermost layer made of synthetic resin, which is arranged on a side of an outer surface of the sealing bag 50 farthest from the power generation unit 40; and at least one metallic layer arranged between the innermost layer and the outermost layer.

As the metallic layer, a layer formed of a corrosion-resistant metallic material is preferred. For example, a metallic foil made of aluminum, an aluminum alloy, titan, chromium, or the like may be used. As the innermost layer, for example, a thermoplastic resin layer made of polyethylene, acid modified polyethylene, polypropylene, acid modified polypropylene, or the like may be used. As the outermost layer, for example, a layer made of engineering plastic such as polyethylene telephthalate (PET), polyamide (nylon) may be used.

A sealing method for all the sealed portions in the sealing bag 50, including, the sealed portions between the spacers 60 and each of the first and second sheets and the sealed portion of the sealing bag composed of the edge 51B of the first sheet 51 and the edge 52B of the second sheet 52, is preferable, but not particularly limited to, a heat sealing or ultrasonic welding method from the viewpoint of productivity.

As the non-aqueous electrolytic solution 50, a solution obtained by dissolving metal salt in an organic solvent is used. For example, in a case of a lithium ion secondary battery, for example, LiBF₄, LiPF₆, LiAlCl₄, LiClO₄, LiCoO₂, or the like is used as lithium salt. As the organic solvent, dimethyl carbonate, diethyl carbonate, ethylene carbonate, methyl ethyl carbonate, or the like is used.

Each of the anode 10 and the cathode 20 is composed of a metallic substrate (not shown) of a metallic foil or expanded metal, which is called a collector, and an active material layer (not shown) formed on the metallic substrate, which is to be the collector. Between the anode 10 and the cathode 20, a separator (not shown) may be arranged as needed.

The metallic substrate of the cathode 20 is electrically connected to one end of the cathode lead 22 made of, for example, aluminum. The other end of the cathode lead 22 is extended out of the sealing bag 50. On the other hand, the metallic substrate of the anode 10 is electrically connected to one end of the anode lead conductor 12 made of, for example, copper or nickel. The other end of the anode lead conductor 12 is extended out of the sealing bag 14.

Furthermore, as shown in Figs. 1 and 2, a portion of the anode lead 12 in contact with the sealed portion of the sealing'bag, which is composed of the edge 51B of the first sheet 51 and the edge 52B of the second sheet 52, is covered with an insulator 14 for preventing contact between the anode lead 12 and the metallic layer in the composite packaging material constituting each sheet. Furthermore, a portion of the cathode lead 22 in contact with the sealed portion of the sealing bag, which is composed of the edge 51B of the first sheet 51 and the edge 52B of the second sheet 52, is covered with an insulator 24 for preventing contact between the cathode lead 22 and the metallic layer in the composite packaging material constituting each sheet.

The constitutions of these insulators 14 and 24 are not particularly limited. For example, each of the insulators 14 and 24 may be constituted of a layer 25a made of thermoplastic polyolefin resin, which is adhered to the anode lead 12 or the cathode lead 22, and a layer 25b made of the cross-linked polyolefin resin, which is provided on the outside thereof.

Next, a description will be made on a method of fabricating the above described sealing bag 50 and non-aqueous electrolyte battery 1.

First, the composite packaging material constituting the first and second sheets is fabricated by use of a known manufacturing method such as dry lamination, wet lamination, hot melt lamination, or extrusion lamination.

As an example, a film, which is a synthetic resin layer that constitutes the composite packaging material and a metallic foil made of aluminum or the like, are prepared. The metallic foil can be prepared by rolling process of a metallic material, for example.

Subsequently, preferably in order to form the above described constitution of the plurality of layers, the composite packaging material (multilayer film) is prepared by adhering the metallic foil to the film, which is the synthetic resin layer, with adhesive interposed therebetween or the like. The composite packaging material is then cut into a predetermined size to prepare a rectangular sheet.

On the other hand, the pair of spacers 60, having a predetermined shape and size is prepared by injection molding or the like.

Next, as previously described with reference to Fig. 2, the pair of spacers 60 is disposed at the side rim of the rectangular sheet. The rectangular sheet is then bent as previously described. For example, the portions where the sheet and the spacers 60 come into contact with each other are heat-sealed in a desired seal width by use of a sealing machine under a predetermined heating condition. The sealing bag 50 in a state having an opening at the top (the portion composed of the edge 51B of the first sheet 51 and the edge 52B of the second sheet 52) is thus obtained.

The anode 10 and the cathode 20, which constitute the power generation unit 40, and the separator (not shown), as needed, are inserted into the inside of the sealing bag 50, which is in the state having the opening, and then the non-aqueous electrolytic solution 20 is injected. Subsequently, the opening of the sealing bag 50 is sealed by use of a sealing machine in a state where part of the anode lead conductor 12 and part of the cathode lead 22 are inserted in the sealing bag 50. In this way, the fabrication of the sealing bag 50 and the non-aqueous electrolyte battery 1 is completed.

### [Second Embodiment]

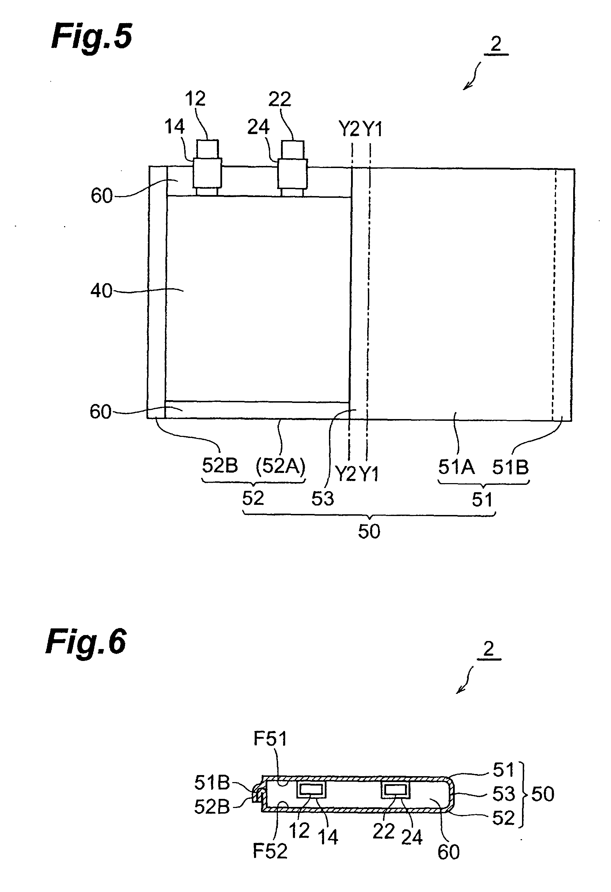

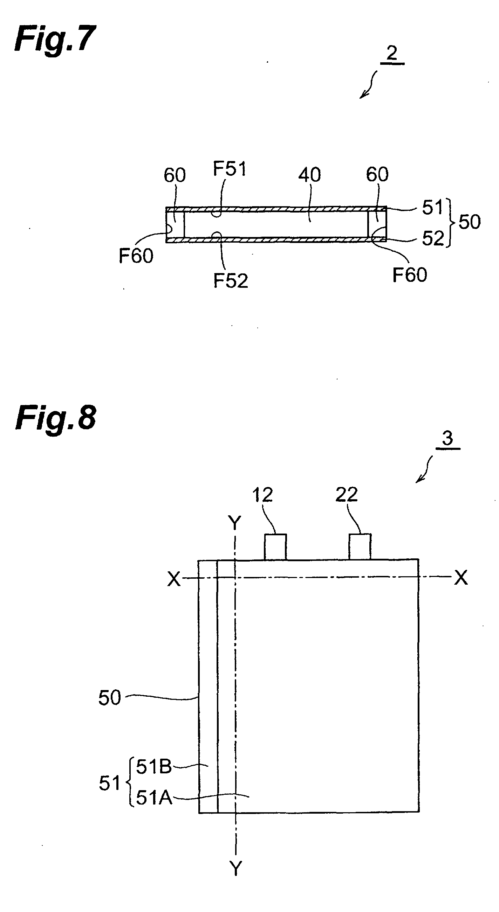

Fig. 4 is a front view showing a second embodiment of the non-aqueous electrolyte battery as a power storage device according to the present invention. Fig. 5 is a developed view showing a basic constitution of the non-aqueous electrolyte battery shown in Fig. 4. Fig. 6 is a sectional view taken along a line X-X of Fig. 4, when viewed from the inside of a sealing bag 50. Fig. 7 is a sectional view taken along a line Y-Y of Fig. 4.

A non-aqueous electrolyte battery 2 shown in Figs. 4 to 7 has a constitution similar to that of the non-aqueous electrolyte battery 1 of the above described first embodiment except the positions of spacers 60. Furthermore, the non-aqueous electrolyte battery 2 can be fabricated by a manufacturing method similar to that of the non-aqueous electrolyte battery 1.

Specifically, as shown in Fig. 5, the sealing bag 50 of the non-aqueous electrolyte battery 2 is formed in a manner where a rectangular sheet composed of a sheet of the composite packaging material is bent at bending lines Y1-Y1 and Y2-Y2 shown in Fig. 5, and the pair of facing edges (the edge 51B of the first sheet 51 and the edge 52B of the second sheet 52) in the inner face of the rectangular sheet is overlapped to be sealed.

As shown in Fig. 6, in order to reduce a size of dead space due to the portion where the edge 51B of the first sheet 51 and the edge 52B of the second sheet 52 are sealed, this portion is folded to be brought into close contact with the side face of the sealing bag 50 so as not to protrude from the projected area of the sealing bag 50. The spacers 60 in a pair are individually arranged at positions on a pair of edges different from the pair of facing edges of the rectangular sheet described above, among the positions facing each other on the edges of the face F51 of the first sheet 51, facing the second sheet.

As shown in Figs. 4 to 6, in the case of the non-aqueous electrolyte battery 2, one of the pair of spacers 60 is integrally molded with each of the anode lead 12 and the cathode lead 22 with one end projecting outwardly. Specifically, as shown in Fig. 6, one of the pair of spacers 60 is formed with two grooves having sectional shapes and sizes adjusted to the sectional shapes and the sizes of the anode lead 12 and the cathode lead 22. The anode lead 12 and the cathode lead 22 are fitted in the respective grooves, and the grooves and the respective leads are adhered to each other, for example by use of heat sealing or ultrasonic welding.

As described above, in the present invention, the anode lead and the cathode lead may be integrally molded with the spacer. In this way, the spacer is disposed at the sealed portion between the sealing bag and each of the anode lead and the cathode lead to be sealed. Accordingly, compared to the case of sealing without the spacer arranged, dead space (for example, the dead space R, R1, and R2 shown in Figs. 19 and 21) outside the sealing bag and dead space (for example, a region R3 shown in Fig. 19 or a region R4 shown in Fig. 21) within the sealing bag can be easily reduced. Furthermore, the strength of the seal between the sealing bag and each of the anode lead and the cathode lead can be easily improved.

Therefore, even if a heavy load is applied to the sealed portions between the sealing bag and each of the anode lead and the cathode lead when accomodating the non-aqueous electrolyte battery in equipment where the non-aqueous electrolyte battery is to be used, it is possible to prevent the edges of the first and second sheets of the sealing bag from separating from each other at the sealed portion with certainty.

### [Third Embodiment]

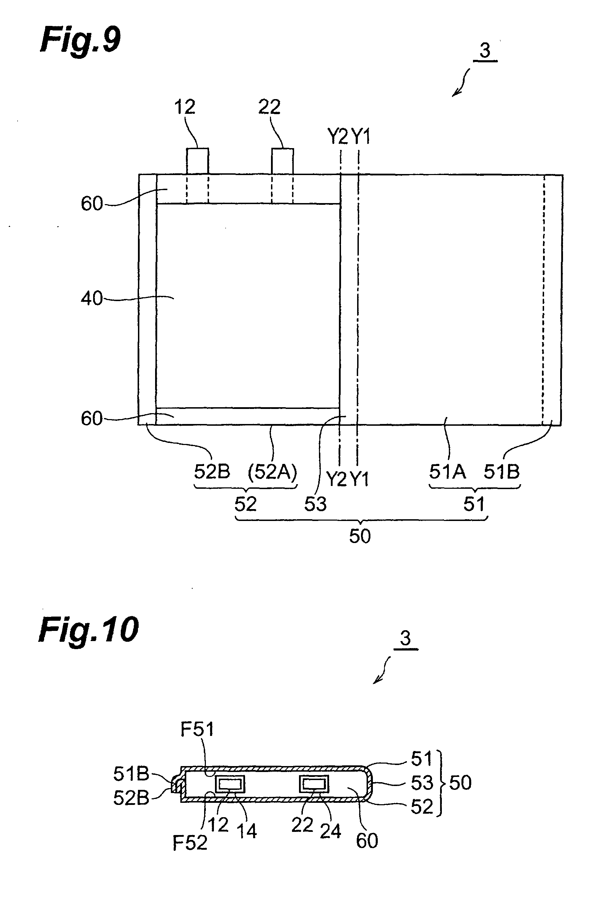

Fig. 8 is a front view showing a third embodiment of the non-aqueous electrolyte battery as the power storage device according to the present invention. Fig. 9 is a developed view showing a basic constitution of the non-aqueous electrolyte battery shown in Fig. 8. Fig. 10 is a sectional view taken along a line X-X of Fig. 8, when viewed from the inside of the sealing bag 50.

As shown in Fig. 9, a non-aqueous electrolyte battery 3 shown in Figs. 8 to 10 has a constitution similar to that of the above described non-aqueous electrolyte battery 2 of the second embodiment except for the form of integral molding of one of the pair of spacers 60, and the anode lead 12 and the cathode lead 22, which are integrally molded with the spacer. The non-aqueous electrolyte battery 3 can be fabricated by a manufacturing method similar to that of the non-aqueous electrolyte battery 2.

Specifically, as shown in Fig. 9, in one of the pair of spacers 60, two through holes having sectional shapes and sizes adjusted to the sectional shapes and the sizes'of the anode lead 12 and the cathode lead 22 are formed. The anode lead 12 and the cathode lead 22 are fitted in the respective through holes, and the through holes and the respective leads are adhered to each other, for example by heat sealing or ultrasonic welding.

### [Fourth Embodiment]

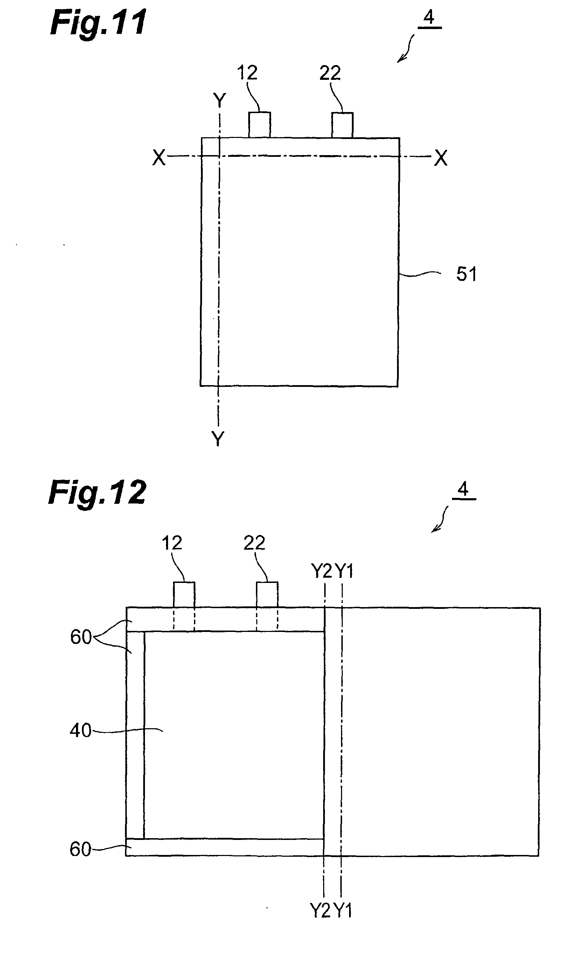

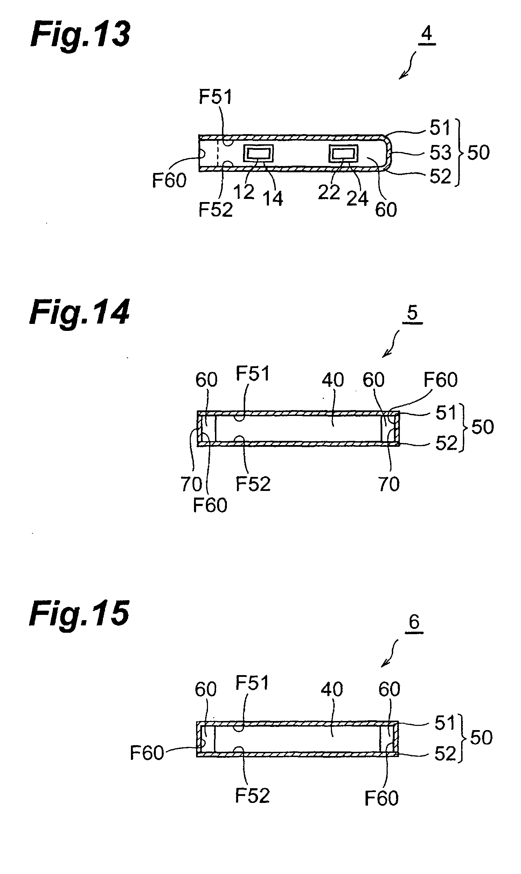

Fig. 11 is a front view showing a fourth embodiment of the non-aqueous electrolyte battery as the power storage device according to the present invention. Fig. 12 is a developed view showing a basic constitution of the non-aqueous electrolyte battery shown in Fig. 11. Fig. 13 is a sectional view taken along a line X-X of Fig. 11.

As shown in Fig. 12, a non-aqueous electrolyte battery 4 shown in Figs. 11 to 13 has a constitution similar to that of the above described non-aqueous electrolyte battery 3 of the third embodiment except for the following. Another spacer 60 is used at the portion (the portion corresponding to the edge 51B of the first sheet 51 and the edge 52B of the second sheet 52 in Figs. 5 and 9) in the pair of facing edges of the rectangular sheet to eliminate the portion where the first and second sheets 51 and 52 directly contact each other when the rectangular sheet is bent at bending lines Y1-Y1 and Y2-Y2. The non-aqueous electrolyte battery 4 can be fabricated by a manufacturing method similar to that of the non-aqueous electrolyte battery 3.

In this way, it is able to eliminate the dead space due to the sealed portion (the portion corresponding to the edge 51B of the first sheet 51 and the edge 52B of the second sheet 52 in Figs. 5 and 9) projecting outward in the non-aqueous electrolyte battery 2 and the non-aqueous electrolyte battery 3 previously described. Note that, in this case, the three spacers 60 may be integrally molded.

### [Fifth Embodiment]

Fig. 14 is a sectional view showing a fifth embodiment of the non-aqueous electrolyte battery as the power storage device according to the present invention. A non-aqueous electrolyte battery 5 shown in Fig. 14 has a constitution similar to the above described non-aqueous electrolyte battery 1 of the first embodiment shown in Fig. 3 except for the regions of the spacers 60 to be described below. Fig. 14 shows a sectional view of the non-aqueous electrolyte battery 5 when viewed in a direction similar to that in the sectional view of the non-aqueous electrolyte battery 1 shown in Fig. 3.

Specifically, as shown in Fig. 14, the non-aqueous electrolyte battery 5 has a constitution similar to that of the above described non-aqueous electrolyte battery 1 of the first embodiment shown in Fig. 3 except for the following. The non-aqueous electrolyte battery 5 further includes metallic layers 70 arranged on the faces F60 of the spacers 60 opposite to the respective faces thereof on the side in contact with the power generation unit 40. The metallic layers 70 are intended to prevent penetration of moisture and/or oxygen into the sealing bag 50 from the outside thereof and dissipation of the electrolyte component within the power generation unit 40 from the inside of the sealing bag 50 to the outside thereof.

In this way, it is possible to efficiently prevent penetration of air, moisture, or the like into the power generation unit 40 and dissipation of the electrolyte component from the inside of the sealing bag 50 to the outside thereof from occurring via the spacers.

The construction material of each metallic layer 70 is not particularly limited, and each metallic layer 70 can use, for example, a metallic foil such as an aluminum foil, a copper foil, or a nickel foil. From the viewpoint of lightweight, excellent corrosion resistance and the like, the aluminum foil is preferably used. In the case where the metallic layer is provided on each spacer 60 which is unitized with the leads, the anode 10 and the cathode 12 are placed so as not to short-circuit via this metallic layer.

The position of arranging each metallic layer 70 is not limited to the position shown in Fig. 14 as long as the position thereof enables prevention of penetration of oxygen or moisture into the power generation unit 40 from the outside thereof via the spacer 60, or dissipation of the construction component of the electrolyte in the power generation unit 40 from the power generation unit 40 to the outside thereof via the spacer 60. Each metallic layer 70 may be arranged within the spacer 60 or on the inner face of the spacer 60 in contact with the power generation unit 40.

The non-aqueous electrolyte battery 5 can be also fabricated by a manufacturing method similar to that of the non-aqueous electrolyte battery 1. As the method of attaching each metallic layer 70 to the spacer 60, there are a method of applying adhesive to the metallic layer 70 of a metallic foil or the like to adhere to the spacer 60 and a method of injection molding of the metallic layer 70 and the spacer 60 in a unitized state.

### [Sixth Embodiment]

Fig. 15 is a sectional view showing a sixth embodiment of the non-aqueous electrolyte battery as the power storage device according to the present invention. A non-aqueous electrolyte battery 6 shown in Fig. 15 has a constitution similar to that of the above described non-aqueous electrolyte battery 1 of the first embodiment shown in Fig. 3 except for the regions of the spacers 60 to be described below. Fig. 15 shows a sectional view of the non-aqueous electrolyte battery 6 when viewed in a direction similar to the sectional view of the non-aqueous electrolyte battery 1 shown in Fig. 3. The non-aqueous electrolyte battery 6 can be also fabricated by a manufacturing method similar to that of the non-aqueous electrolyte battery 1.

Specifically, as shown in Fig. 15, the non-aqueous electrolyte battery 6 has a constitution similar to that of the above described non-aqueous electrolyte battery 1 of the first embodiment shown in Fig. 3 except that the faces F60 of the spacers 60 opposite to the faces on the side in contact with the power generation unit 40 are covered with the edges of the first sheet 51. In this case, the spacer 60 may be covered with the edges of the second sheet 52.

In this way, it is possible that penetration of air, moisture or the like into the power generation unit 40 and dissipation of the electrolyte component from the inside of the sealing bag 50 to the outside thereof can be prevented from occurring via the spacers more efficiently. In this case, compared to the non-aqueous electrolyte battery 5 of the above described fifth embodiment, manufacturing of the spacers 60 is facilitated as the face F60 of each spacer 60 exposed to the outside does not have to be covered with the metallic layer 70.

Hereinbefore, the preferred embodiments of the present invention have been described in detail, but the present invention is not limited to the above described embodiments.

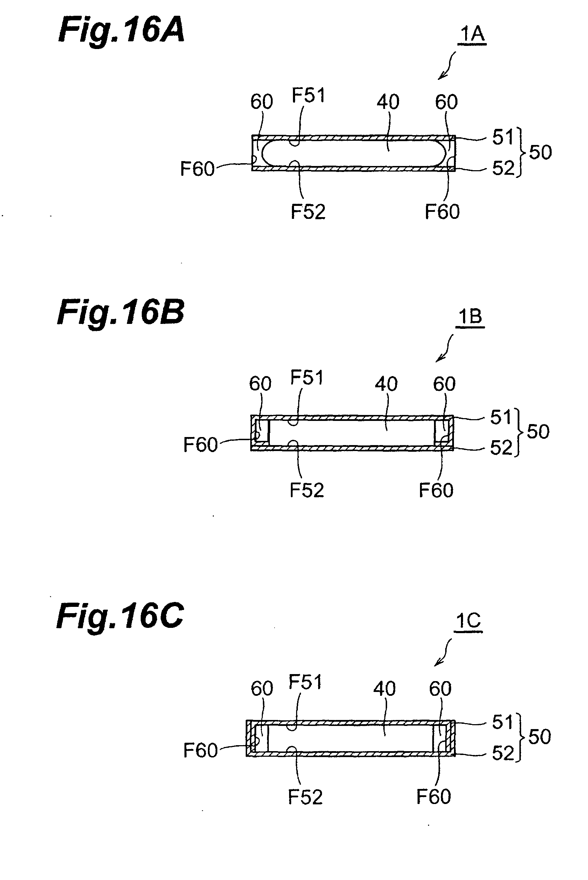

For example, in the above described embodiments, a description has been made of a case using the spacers 60 of a rectangular section, but in the present invention, the shape of each spacer is not particularly limited. For example, similarly to a non-aqueous electrolyte battery 1A shown in Fig. 16A, each spacer 60 may be provided with a concave portion (groove) on the face thereof on the side in contact with the power generation unit 40 in the non-aqueous electrolyte battery 1 shown in Fig. 3. Accordingly, compared to the case without the concave portion (groove) provided, the sealing bag 50 can accommodate the power generation unit of a greater volume.

For example, the description has been made using the non-aqueous electrolyte battery 5 of the fifth embodiment of the case where the metallic layers are added to the non-aqueous electrolyte battery 1 of the first embodiment shown in Figs. 1 to 3. However, the metallic layers may be provided for the non-aqueous electrolyte battery 2 of the second embodiment, the non-aqueous electrolyte battery 3 of the third embodiment, or the non-aqueous electrolyte battery 4 of the fourth embodiment. In this case, the position of arranging each metallic layer 70 is not limited, and for each of the batteries, the metallic layer 70 may be arranged in any of the face of each spacer 60 on the side in contact with the power generation unit 40, for example the inside of the spacer 60, or the face F60 of the spacer 60 opposite to the face on the side in contact with the power generation unit 40.

Furthermore, in the non-aqueous electrolyte battery 6 of the sixth embodiment, the description has been made of the battery having a constitution in the case where, in the non-aqueous electrolyte battery 1 of the first embodiment shown in Figs. 1 to 3, the face F60 of each spacer 60 opposite to the face on the side in contact with the power generation unit 40 is covered with the edge of at least one of the first and second sheets 51 and 52. However, such a constitution may be provided for the non-aqueous electrolyte battery 2 of the second embodiment, the non-aqueous electrolyte battery 3 of the third embodiment, or the non-aqueous electrolyte battery 4 of the fourth embodiment.

Here, in the present invention, in the case of the constitution, in which the face of each spacer of the non-aqueous electrolyte battery opposite to the face on the side in contact with the power generation unit is covered with the edge of at least one of the first and second sheets, the covering style is not particularly limited. For example, similarly to a non-aqueous electrolyte battery 1B shown in Fig. 16B, a constitution may be adopted, in which each spacer 60 is covered with the edge of the first sheet 51, the edge of the first sheet 51 being inserted between the spacer 60 and the second sheet 52 of the other sheet, and with the spacer 60 and the second sheet 52 not being in contact with each other. In this present invention, even in this case, the spacers are still arranged between the face F51 of the first sheet 51 facing the second sheet 52 and the face F52 of the second sheet 52 facing the face F51.

For example, like a non-aqueous electrolyte battery 1C shown in Fig. 16C, the face F60 of each spacer 60 opposite to the face on the side in contact with the power generation unit 40 may be covered with the edges of both the first and second sheets 51 and 52.

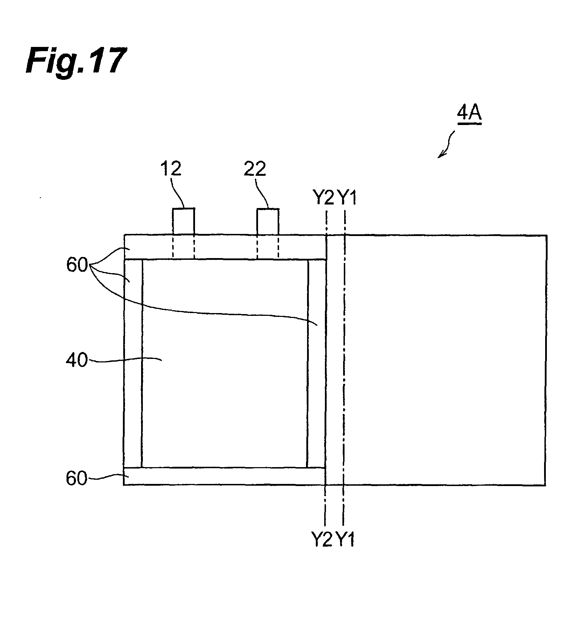

In each embodiment described above, the description was made of the battery having a constitution, in which the spacer 60 was not arranged in the portion along the bending lines (for example, portions along the lines indicated by X1-X1, X2-X2, Y1-Y1, and Y2-Y2 in Figs. 2, 5, 9, and 12) in one sheet. However, in the present invention, in the case of fabricating the sealing bag by bending a sheet, the spacer may be disposed along the bending lines in the sheet. For example, like a non-aqueous electrolyte battery 4A shown in Fig. 17, an additional spacer 60 may be arranged at the portion along the bending lines Y1-Y1 and Y2-Y2 in the non-aqueous electrolyte battery 4 shown in Figs. 11 to 13.

In each embodiment described above, the description was made for the case where the power storage device of the present invention is applied to the non-aqueous electrolyte battery. However, constitutions similar to those of the above described embodiments can be used in the case where the power storage device is applied to the electrolytic capacitor or the electric double layer capacitor.

For example, when the power storage device of the present invention is applied to the electrolytic capacitor, the constitution of the power generation unit is not particularly limited. For example, in the case of the aluminum electrolytic capacitor, as the cathode material, for example, an aluminum foil having a surface subjected to an alumite treatment may be used. As the anode material, for example, an aluminum foil may be used. As the electrolyte, for example, an electrolytic solution obtained by dissolving ammonium borate in ethylene glycol may be used. As the anode lead, for example, a conductor obtained by oxidization of aluminum, such as an alumite treatment, may be used. As the cathode lead, for example, a conductor of untreated aluminum may be used.

For example, when the power storage device of the present invention is applied to the electric double layer capacitor, the constitution of the power generation unit is not particularly limited. For example, for the anode and the cathode, ones obtained by adhering a sheet fabricated by kneading activated carbon with PTFE and acetylene black to an aluminum foil as a collector may be used. For example, as the electrolyte, an electrolytic solution obtained by adding tetraethylammonium tetrafluoroborate (Et₄NBF₄) to propylene carbonate so as to have a concentration of Et₄NBF₄ of, for example, 0.8 mol/L may be used. Furthermore, as the separator, glass non-woven fabric or the like may be used.

### [Examples]

The power storage device according to the present invention will be described further in detail below with reference to examples and comparative examples, but the present invention is not limited to these examples.

### (Example 1)

A non-aqueous electrolyte battery having a similar constitution to that of the non-aqueous electrolyte battery 1 of the first embodiment of the present invention shown in Figs. 1 to 3 was fabricated by the method previously described.

The apparent volume of the non-aqueous electrolyte battery was 5.83 cm³ (maximum height: 55.2 mm, maximum width: 33 mm, maximum thickness: 3.2 mm). The volume of the power generation unit in the sealing bag was 4.5 cm³. The volume of each spacer (width: 1.5mm, length: 50 mm, thickness: 3.0 mm) used was 0.45 cm³. Here, the area of the sealed portion (the portion indicated by the reference symbol 51B in Fig. 1) where the first and second sheets directly contacted each other without the spacers interposed therebetween was 4.38 cm².

The power generation unit with a thickness of 3.0 mm was prepared by folding at pitch of 30 mm a laminate body where a separator (Asahi Kasei Co., trade name: Hipore, width: 50 mm, length: 300 mm, thickness: 20 µm) was arranged between an anode plate (width: 50 mm, length: 300 mm) and a cathode plate (width: 50 mm, length: 300 mm).

As the anode plate, one obtained by coating a surface of a copper foil (thickness: 20 µm) with a layer (thickness: 70 µm) of an anode activated material (graphite) was used. As the cathode plate, one obtained by coating a surface of an aluminum foil (thickness: 20 µm) with a layer (thickness: 70 µm) of a cathode activated material (lithium cobaltate) was used.

LiPF₆ was added to a solvent mixture of ethylene carbonate and diethyl carbonate in a mixture radio of ethylene carbonate to diethyl carbonate of 1/1 in a mass ratio so as to have a concentration of 1 mol/L, thus preparing a non-aqueous electrolytic solution. The above described laminate body of the electrodes and the separator were impregnated with 2 g of the obtained non-aqueous electrolytic solution as the non-aqueous electrolyte.

As the anode lead, a nickel foil (width: 3.0 mm, length: 60 mm, thickness: 0.1 µm) was used. As the cathode lead, an aluminum foil (width: 3.0 mm, length: 60 mm, thickness: 0.1 µm) was used.

As the insulator, acid-modified polyethylene resin film (width: 7 mm, length: 7mm, thickness: 0.1 mm) was used. Heat seal was performed in a state where each lead was arranged between two acid-modified polyethylene resin films. At this time, the two acid modified polyethylene resin films were arranged in the middle (in a longitudinal direction) of each lead. Each lead and each electrode were electrically connected by means of ultrasonic welding.

As the composite packaging material constituting the first and second sheets, a composite packaging material (width: 33 mm, length: 116 mm, thickness: 84 µm) composed of four layers, a PET film layer (thickness: 12 µm), an urethane adhesive layer (thickness: 2 µm), an aluminum foil layer (thickness: 20 µm), and an acid-modified polyethylene layer (thickness: 50 µm) from the outermost layer side was used.

Two spacers were prepared by irradiating a gamma ray of 100 kGy on cuboids (width: 1.5 mm, length: 50 mm, thickness: 3.0 mm) made of high-density polyethylene resin, formed by cutting, for cross-linking of the high-density polyethylene resin.

The joint at the sealed portion (the portion indicated by the reference symbol 51B in Fig. 1) where the first and second sheets directly contacted each other without the spacers interposed therebetween was performed by sandwiching the portion of the insulator of each lead between the first and second sheets at the sealed portion and then heat sealing.

The output energy of this non-aqueous electrolyte battery was 1.5 W·h, where the volumetric energy density on the basis of the volume of space for the battery to be mounted was 257.3 W·h·L⁻¹.

### (Comparative example 1)

A non-aqueous electrolyte battery having a constitution similar to Example 1 was fabricated by the method previously described. However, the sealing bag thereof had a constitution similar to the sealing bag provided for the conventional non-aqueous electrolyte battery 200 shown in Figs. 20 and 21, and the non-aqueous electrolyte battery had conditions as shown below.

The apparent volume of this non-aqueous electrolyte battery was 6.51 cm³ (maximum height: 58 mm, maximum width 33 mm, and maximum thickness: 3.4 mm). The volume of the power generation unit within the sealing bag was 4.5 cm³.

Moreover, the total area of the sealed portion (the portion corresponding to the edge 91B in Figs. 20 and 21) where the first and second sheets directly contacted each other was 4.38 cm³.

The output energy of the power generation unit of this non-aqueous electrolyte battery was 1.5 W·h, where the volumetric energy density on the basis of the volume of space for the battery to be mounted was 230.4 W·h·L⁻¹.

### (Example 2)

A sealing bag having a constitution similar to the sealing bag provided for the non-aqueous electrolyte battery of Example 1 was fabricated by the method previously described, except that only the non-aqueous electrolyte used in the non-aqueous electrolyte battery of Example 1 of 2 g was enclosed inside the sealing bag.

### (Example 3)

A sealing bag having a constitution similar to the sealing bag 50 provided for the non-aqueous electrolyte battery 5 of the fifth embodiment of the present invention, shown in Fig. 14, was fabricated by the method previously described. This sealing bag was constituted under conditions similar to Example 1 except that the metallic layers were attached to the spacers. In other words, this sealing bag had a constitution similar to the sealing bag of Example 2 except that the metallic layers were attached to the spacers.

As the metallic layers, aluminum foils (thickness: 0.1 mm, size: 3.4 mm × 58 mm) were used. In this sealing bag, only the non-aqueous electrolyte used in Example 1 of 2 g was enclosed.

### [Sealability evaluation test]

Two samples, for each of the sealing bag shown in Example 2 and the sealing bag shown in Example 3 were prepared. Based on the "humidity cabinet test method" described in JIS K 2246-1991.5.34, these samples were placed in a RH constant temperature and humidity chamber and left in the static state for thirty days under conditions of temperature of 60°C and relative humidity of 95%. After thirty days, each sealing bag was opened and the concentration of water contained in the enclosed non-aqueous electrolyte was measured by Karl Fischer titration.

As a result, the concentrations of water of the two samples of the sealing bag of Example 2 were 450 ppm and 520 ppm. On the other hand, the concentrations of water of the two samples of the sealing bag of Example 3 were 25 ppm and 22 ppm.

Therefore, it was confirmed to be effective that the face of each spacer exposed to the outside was covered with a metallic layer or the edges of at least one of the first and second sheets, from the viewpoint of more surely suppressing penetration of air, moisture, and the like to the inside of the sealing bag from the outside or dissipation of the electrolyte component from the inside of the sealing bag to the outside.

### Industrial Applicability

As described above, according to the present invention, the dead space created due to the sealed portion of the sealing bag of the power storage device in the space to be used for mounting the device in the equipment, can be sufficiently reduced. Therefore, it is possible to provide a power storage device which is high in the volumetric energy density on the basis of the volume of space for the device to be mounted and capable of efficiently utilizing the space for the device to be mounted.

## Claims

1. A power storage device comprising:
a power generation unit including an anode, a cathode, and an electrolyte;
a sealing bag for enclosing said power generation unit;
an anode lead having one end electrically connected to said anode and the other end projected out of said sealing bag; and
a cathode lead having one end electrically connected to said cathode and the other end projected out of said sealing bag,
wherein said sealing bag includes
a first sheet composed of a composite packaging material and a second sheet composed of the composite packaging material, which face each other; and
spacers made of synthetic resin, the spacers being arranged between a face of the first sheet facing the second sheet and a face of the second sheet facing the face of the first sheet to secure space for accommodating said power generation unit, and
wherein said spacers are arranged on edges of said face of the first sheet facing said second sheet.

2. The power storage device according to claim 1,
wherein said spacers at least in a pair are individually arranged at positions facing each other in the edges of said face of the first sheet facing said second sheet.

3. The power storage device according to claim 1,
wherein a metallic layer is further arranged either on any one of a face of each of said spacers on a side in contact with said power generation unit, a face of each of said spacers opposite to said face, or arrenged inside of each of said spacers, and
wherein the metallic layer prevents penetration of moisture and/or oxygen to an inside of said sealing bag from an outside and dissipation of an electrolyte component contained in said power generation unit from the inside of said sealing bag to the outside.

4. The power storage device according to claim 1,
wherein a face of each of said spacers opposite to a face thereof on a side in contact with said power generation unit is covered with the edge of at least one of the first and second sheets.

5. The power storage device according to claim 1,
wherein said sealing bag has a sealed portion where the first and second sheets are joined to each other without said spacers interposed therebetween, and the sealed portion is formed in close contact with a body of said sealing bag.

6. The power storage device according to claim 1,
wherein a construction material of said spacers is one type of polymer selected from a group consisting of cross-linked polyolefin and liquid crystal polymer.

7. The power storage device according to claim 1,
wherein said composite packaging material is constituted of three layers or more including an innermost layer made of synthetic resin arranged on an innermost side of said sealing bag in contact with said power generation unit, an outermost layer made of synthetic resin arranged on an outer face side of said sealing bag farthest from the power generation unit, and at least one metallic layer arranged between the innermost layer and the outermost layer.

8. The power storage device according to claim 1,
wherein said anode lead and said cathode lead are individually molded integrally with one of said spacers.

9. The power storage device according to claim 1,
wherein the electrolyte is a non-aqueous electrolyte.
